# EUROPÄISCHE PATENTSCHRIFT

(11) **EP 0 861 766 B1**
(45) Veröffentlichungstag und Bekanntmachung des Hinweises auf die Patenterteilung: **11.09.2002**
(21) Anmeldenummer: 97122350.8
(22) Anmeldetag: 18.12.1997
(51) Int. Cl.: B62D 23/00, B62D 29/00, B62D 25/04, B62D 25/06, B62D 27/02

(54) **Tragstruktur einer Kraftfahrzeug-Karosserie mit Hohlprofilträgern**
Motor vehicle with a supporting structure of hollow beams
Véhicule automobile à structure de support à poutres creuses

(30) Priorität: 28.02.1997 DE 19708214
(43) Veröffentlichungstag der Anmeldung: 02.09.1998
(73) Patentinhaber: AUDI AG, 85045 Ingolstadt (DE)
(72) Erfinder: Enning, Norberg, 85095 Denkendorf (DE)
(74) Vertreter: Engelhardt, Harald

(56) Entgegenhaltungen:
- EP-A- 0 501 226
- DE-A- 4 407 501
- GB-A- 2 303 589
- US-A- 5 269 585

## Beschreibung

Die Erfindung betrifft eine Tragstruktur einer Kraftfahrzeugkarosserie mit Hohlprofilträgern, insbesondere eine gitterförmige Tragstruktur aus Leichtmetall-Strangprofilen nach dem Oberbegriff des Anspruchs 1.

Eine derartige Tragstruktur als Gitterrahmenstruktur für Personenkraftwagen (EP 0 146 716) besteht aus Aluminium-Strangprofilen und gegossenen Knotenelementen, an die die Aluminium-Strangprofile angeschlossen sind. Die Verwendung von gegossenen Aluminium-Knotenelementen führt zwar zu einer stabilen Tragstruktur mit stabiler Anschlußtechnik für die Aluminium-Strangprofile, ist jedoch insgesamt kostenintensiv. Es sind auch verschweißte Stumpf-Stoßverbindungen von Strangprofilen bekannt, deren Belastbarkeit jedoch geringer ist als bei einer Knotenverbindung mit Gußknotenelementen.

Weiter sind Wagenkastengerippe für Straßen- und Schienenfahrzeuge aus Hohlprofilstäben bekannt (DE 21 28 281 B2; DE 27 51 753 C2). Die Verbindung im Winkel zusammenstoßender Hohlprofilstäbe, die z. B. das Gerippe einer Wand bilden, wird durch dreieckige Eckstücke verstärkt, die in die Verbindungswinkel eingesetzt und dort verschweißt werden. Damit wird ein solches Gerippe insbesondere gegen Scherbewegungen in der Wandebene der Hohlprofilstäbe stabilisiert. Seitenbelastungen auf die Knotenstellen werden dagegen durch solche Eckstücke nur wenig mit aufgenommen und abgestützt. Solche Verbindungen sind daher beispielsweise für Knotenstellen an Personenkraftwagen, die bei einem Fahrzeugaufprall hohe Seitenbelastungen aufnehmen und abstützen sollen, wenig geeignet. Eine solche, bei einem Fahrzeugüberschlag mit großer Seitenbelastung beaufschlagte Knotenstelle liegt unter anderem an der Verbindung zwischen einem Dachlängsträger, einem B-Pfosten und einem Dachquerträger, wobei diese Knotenstelle zur Verhinderung einer Dacheindrückung hoch belastbar ausgebildet sein muß.

Aufgabe der Erfindung ist es, eine gattungsgemäße Tragstruktur einer Kraftfahrzeugkarosserie mit Hohlprofilträgern so weiterzubilden, daß in kritischen Knotenstellen hohe Seitenbelastungen aufgenommen und abgestützt werden können.

Diese Aufgabe wird mit den Merkmalen des Anspruchs 1 gelöst.

Gemäß Anspruch 1 ist das Knotenverstärkungselement ein Strangprofilabschnitt eines Hohlprofils, der der Knotenstelle an der Karosserieinnenseite unterlegt und damit verbunden ist dergestalt, daß die Strangprofilrichtung in der Richtung des ersten Hohlprofilträgers verläuft und daß die Profilform des Strangprofilabschnitts eine größere Breite als die Breite des ersten Hohlprofilträgers aufweist und beidseitig mit Anlageflächen jeweils wenigstens am zweiten Hohlprofilträger und am dritten Hohlprofilträger anliegt und damit verbunden ist.

Dadurch wird erreicht, daß insbesondere eine Seitenbelastung auf die Knotenstelle von der Karosserieaußenseite her vom Strangprofilabschnitt als Zugband mit aufgenommen und abgestützt wird. Dadurch ergibt sich eine gegen solche Seitenbelastungen sehr stabile Knotenstelle, die auch an aufprallkritischen Stellen einsetzbar ist.

Besonders vorteilhaft ist nach Anspruch 2 die Profilform des Strangprofilabschnitts flach mit mehreren Profilkammern ausgebildet, wodurch ein hochbelastbares Zugband geschaffen ist. In einer konkreten Ausführungsform nach Anspruch 3 liegen dabei vier Profilkammern nebeneinander mit beidseitigen, einwandigen Randflanschen.

In einer bevorzugten Ausführungsform nach Anspruch 4 ist die Abschnittlänge des Strangprofilabschnitts kürzer als jeweils die Breite des zweiten und dritten Hohlprofilträgers. Dadurch steht bei aufgesetztem Strangprofilabschnitt der zweite und dritte Hohlprofilträger mit Rändern seitlich über. Diese Randbereiche sind insbesondere für stabile Aluminium-Längsschweißungen gut geeignet, wobei kritische Querschweißungen vermeidbar sind.

Bevorzugt wird nach Anspruch 5 eine erfindungsgemäße Knotenstellenausbildung bei einer Tragstruktur verwendet, die insgesamt aus Leichtmetall-Strangprofilen gebildet ist.

Die Verbindung des Strangprofilabschnitts mit den Hohlprofilträgern wird zweckmäßig in an sich bekannter Weise durch Schweißverbindungen und/oder durch Klebeverbindungen hergestellt.

Eine erfindungsgemäße Knotenstelle ist besonders vorteilhaft gemäß Anspruch 7 an einer Knotenstelle eines Dachlängsträgers, eines daran angeschlossenen B-Pfostens und eines Dachquerträgers einsetzbar, wobei der Dachquerträger ausgehend vom Dachlängsträger in einem Bogen in eine waagrechte Richtung abbiegt, so daß im Karosserieinnenraum ein Eckbereich gebildet ist, in dem der Strangprofilabschnitt aufgenommen ist, ohne die Kopffreiheit von Fahrzeuginsassen einzuschränken.

Anhand einer Zeichnung wird ein Ausführungsbeispiel der Erfindung näher erläutert.

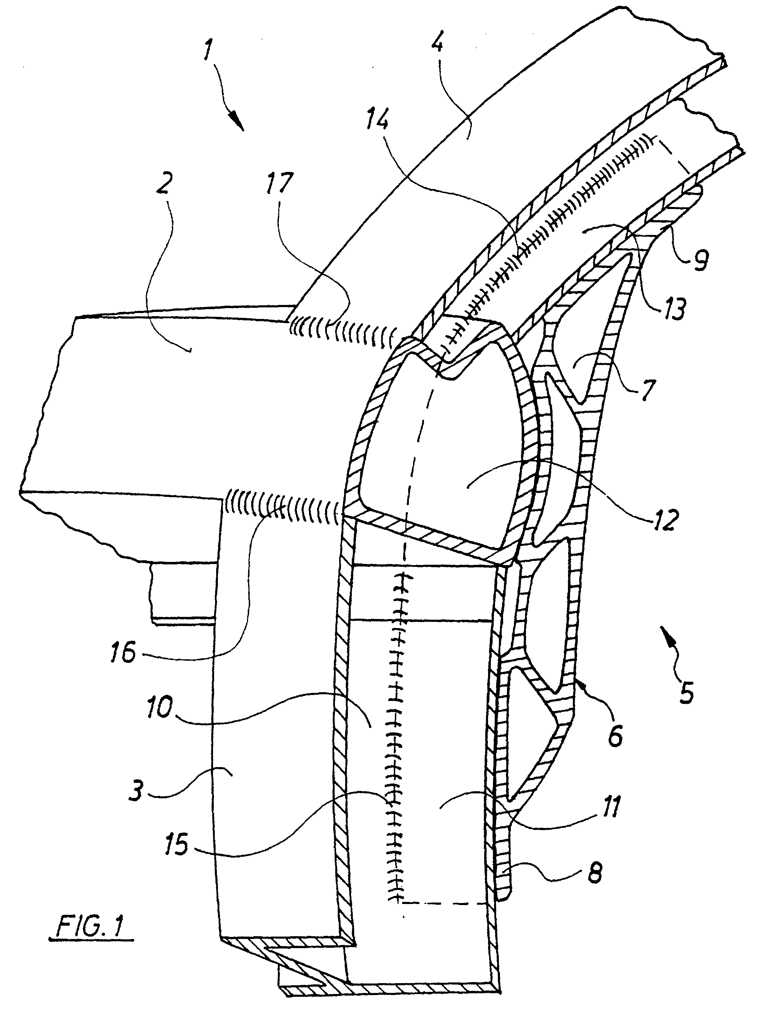

Die einzige Figur zeigt eine Knotenstelle 1 einer Tragstruktur einer Kraftfahrzeugkarosserie, die durch einen seitlichen, etwa waagrecht verlaufenden Dachlängsträger 2, einen durch einen Stumpfstoß angeschlossenen, etwa senkrecht stehenden B-Pfosten 3 und einen durch einen Sturnpfstoß an den Dachlängsträger 2 angeschlossenen Dachquerträger 4 gebildet ist. Der Dachquerträger 4 erstreckt sich ausgehend vom Dachlängsträger 2 schräg nach oben und biegt dann in einem Bogen in eine etwa waagrechte Richtung ab, wodurch im Karosserieinnenraum ein Eckbereich 5 gebildet wird.

In diesem Eckbereich 5 ist als Knotenverstärkungselement ein Strangprofilabschnitt 6 eines Hohlprofils angeordnet, der der Knotenstelle an der Karosserieinnenseite unterlegt ist. Der Dachlängsträger 2, der B-Pfosten 3 und der Dachquerträger 4, sowie der Strangprofilabschnitt 6 sind Teile von Leichtmetall-Strangprofilen, die in einem Verbund einer Gitterstruktur einer Kraftfahrzeugkarosserie enthalten sind. In Fig. ist ein Schnitt durch die Knotenstelle 1 in Fahrzeugquerrichtung gezeigt.

Die Profilform des Strangprofilabschnitts 6 ist flach mit vier nebeneinander liegenden Profilkammern 7 und beidseitigen, einwandigen Randflanschen 8, 9 ausgeführt. Die Strangprofilrichtung des Strangprofilabschnitts 6 verläuft in Richtung des Dachlängsträgers 2. Die Abschnittlänge des Strangprofilabschnitts 6 ist kürzer als die Breite des B-Pfostens 3 und des Dachquerträgers 4, so daß seitliche Randüberstände 10 verbleiben.

Der Strangprofilabschnitt 6 ist weiter so gestaltet, daß er mit Anlageflächen 11, 12 und 13 flächig am B-Pfosten 3, am Dachlängsträger 2 und am Dachquerträger 4 von der Karosserieinnenseite her anliegt, wobei der Strangprofilabschnitt 6 durch randseitige Längsschweißungen 14, 15 mit dem B-Pfosten 3 und dem Dachquerträger 4 verbunden ist. Im Bereich der Anlagefläche 12 am Dachlängsträger 2 kann ggf. auf ungünstige Querschweißungen verzichtet werden. Weiter sind der B-Pfosten 3 und der Dachquerträger 4 im Stumpfstoßbereich unmittelbar über Schweißnähte 16, 17 mit dem Dachlängsträger 2 verbunden.

Bei Seitenbelastungen auf die Knotenstelle 1 von der Karosserieaußenseite her, wirkt der Strangprofilabschnitt 6 als Zugband zwischen dem B-Pfosten 3 und dem Dachlängsträger 2, wodurch die Knotenstellenverbindung gegenüber einer einfachen Stumpfstoßverbindung entlastet und stabiler wird.

## Patentansprüche

1. Tragstruktur einer Kraftfahrzeugkarosserie mit Hohlprofilträgern, wobei an wenigstens einer Knotenstelle (1) an einen ersten Hohlprofilträger (2) beidseitig gegenüberliegend ein zweiter Hohlprofilträger (3) und ein dritter Hohlprofilträger (4) jeweils durch einen Stumpfstoß angeschlossen und miteinander verbunden sind, und
mit einem Knotenverstärkungselement (6),
**dadurch gekennzeichnet,**
**daß** als Knotenverstärkungselement ein Strangprofilabschnitt (6) eines Hohlprofils verwendet ist, der der Knotenstelle (1) an der Karosserieinnenseite unterlegt und damit verbunden ist, dergestalt
**daß** die Strangprofilrichtung des Strangprofilabschnitts (6) in der Richtung des ersten Hohlprofilträgers (2) verläuft, und
**daß** die Profilform des Strangprofilabschnitts (6) eine größere Breite als die Breite des ersten Hohlprofilträgers (2) aufweist und beidseitig mit Anlageflächen (11, 13) jeweils am zweiten Hohlprofilträger (3) und am dritten Hohlprofilträger (4) anliegt und damit verbunden ist, so daß insbesondere eine Seitenbelastung auf die Knotenstelle (1) vom Strangprofilabschnitt (6) als Zugband mitaufgenommen und abgestützt wird.

2. Tragstruktur nach Anspruch 1, **dadurch gekennzeichnet,**
**daß** die Profilform des Strangprofilabschnitts (6) flach mit mehreren Profilkammern (7) ausgebildet ist.

3. Tragstruktur nach Anspruch 2, **dadurch gekennzeichnet, daß** vier Profilkammern (7) nebeneinander liegen mit beidseitigen einwandigen Randflanschen (8, 9).

4. Tragstruktur nach einem der Ansprüche 1 bis 3, **dadurch gekennzeichnet, daß** die Abschnittlänge des Strangprofilabschnitts (6) kürzer als jeweils die Breite des zweiten Hohlprofilträgers (3) und dritten Hohlprofilträgers (4) ist.

5. Tragstruktur nach einem der Ansprüche 1 bis 4, **dadurch gekennzeichnet, daß** die Hohlprofilträger (2, 3, 4) Leichtmetallstrangprofile sind und der Strangprofilabschnitt (6) ebenfalls aus Leichtmetall hergestellt ist.

6. Tragstruktur nach einem der Ansprüche 1 bis 5, **dadurch gekennzeichnet, daß** die Verbindung des Strangprofilabschnitts (6) mit dem zweiten Hohlprofilträger (3) und mit dem dritten Hohlprofilträger (4) und ggf. mit dem ersten Hohlprofilträger (2) durch Schweißverbindungen und/oder durch Klebeverbindungen hergestellt ist.

7. Tragstruktur nach einem der Ansprüche 1 bis 6, **dadurch gekennzeichnet,**
**daß** der erste Hohlprofilträger ein seitlicher, etwa waagrecht verlaufender Dachlängsträger (2) ist,
**daß** der zweite Hohlprofilträger ein etwa senkrecht stehender B-Pfosten (3) ist, und
**daß** der dritte Hohlprofilträger ein Dachquerträger (4) ist, der ausgehend vom Dachlängsträger (2) in einem Bogen in eine waagrechte Richtung abbiegt, so daß im Karosserieinnenraum ein Eckbereich (5) gebildet ist, in dem der Strangprofilabschnitt (6) liegt.

## Claims

1. Support structure for a motor vehicle body with hollow profile supports, and on at least one joint (1) is positioned on a first hollow profile support (2) on both sides opposite each other a second hollow profile support (3) and a third hollow profile support (4), which are respectively connected and joined together by a butt joint, and
with a butt reinforcing element (6),
**characterised in that**
the joint reinforcing element is an extrusion profile section (6) of a hollow profile which is placed under the joint (1) inside the body and connected thereto, in such a manner that
the extrusion profile direction of the extrusion profile section (6) extends in the direction of the first hollow profile support (2), and
the profile form of the extrusion profile section (6) has a greater width than the width of the first hollow profile support (2) and abuts on both sides with abutment surfaces (11, 13) against the respective second hollow profile support (3) and against the third hollow profile support (4) and is connected thereto, so that in particular a lateral load on the joint (1) is also accommodated and supported by the extrusion profile section (6) and a tensile band.

2. Support structure according to Claim 1, **characterised in that** the profile form of the extrusion profile section (6) is designed to be flat with a plurality of profile chambers (7).

3. Support structure according to Claim 2, **characterised in that** four profile chambers (7) lie alongside each other with single wall edge flanges (8, 9) on both sides.

4. Support structure according to one of Claims 1 to 3, **characterised in that** the sectional length of the extrusion profile section (6) is shorter than the respective width of the second hollow profile support (3) and the third hollow profile support (4).

5. Support structure according to one of Claims 1 to 4, **characterised in that** the hollow profile supports (2, 3, 4) are light metal extrusion profiles, and the extrusion profile section (6) is also made of light metal.

6. Support structure according to one of Claims 1 to 5, **characterised in that** the connection of the extrusion profile section (6) to the second hollow profile support (3) and to the third hollow profile support (4) and, if appropriate, to the first hollow profile support (2) is established by welded joints and/or glued connections.

7. Support structure according to one of Claims 1 to 6, **characterised in that**
the first hollow profile support is a lateral roof support (2) which extends approximately horizontally, and
the second hollow profile support is an approximately vertically positioned B-support (3), and
the third hollow profile support is a transverse roof support (4) which, starting from the longitudinal roof support (2), bends at an arc into a horizontal direction so that in the inside area of the body is established a corner area (5) in which lies the extrusion profile section (6).

## Revendications

1. Structure de support d'une carrosserie de véhicule automobile, avec des poutres en profilé creux, en au moins un point formant noeud (1) sur une première poutre en profilé creux (2), une deuxième poutre en profilé creux (3) et une troisième poutre en profilé creux (4) étant chacune raccordée ensemble, des deux côtés et à l'opposé l'une de l'autre, au moyen d'un joint d'about et reliées ensemble, et
avec un élément de renforcement de noeud (6),
**caractérisée en ce que**,
on utilise comme élément de renforcement de noeud, un tronçon de profilé extrudé (5) d'un profilé creux, placé en position sous-jacente du point formant noeud (1) sur le côté intérieur de la carrosserie et relié à celui-ci, de manière que
la direction du profilé extrudé du tronçon de profilé extrudé (6) s'étend dans la direction de la première poutre en profilé creux (2), et
**en ce que** la forme profilée du tronçon de profilé extrudé (6) est d'une largeur supérieure à la largeur de la première poutre en profilé creux (2) et est en appui des deux côtés par des surfaces d'appui (11, 13) chaque fois sur la deuxième poutre en profilé creux (3) et sur la troisième poutre en profilé creux (4) et est reliée avec elles, de manière qu'en particulier une charge latérale, exercée sur le point formant noeud (1), à l'avant du tronçon de profilé extrudé (6) faisant office de bande de traction, soit supportée conjointement et bénéficie d'un soutien.

2. Structure de support selon la revendication 1, **caractérisée en ce que** la forme de profilé du tronçon de profilé extrudé (6) est plate, avec plusieurs chambres de profilé (7).

3. Structure de support selon la revendication 2, **caractérisée en ce que** quatre chambres de profilé (7) sont placées l'une à côté de l'autre, avec des rebords de bordure (8, 9) à âme simple sur les deux côtés.

4. Structure de support selon l'une des revendications 1 à 3, **caractérisée en ce que** la longueur du tronçon de profilé extrudé (6) est inférieure chaque fois à la largeur de la deuxième poutre en profilé creux (3) et de la troisième poutre en profilé creux (4).

5. Structure de support selon l'une des revendications 1 à 4, **caractérisée en ce que** les poutres en profilé creux (2, 3, 4) sont des profilés extrudés en métal léger et le tronçon de profilé extrudé (6) est également fabriqué en métal léger.

6. Structure de support selon l'une des revendications 1 à 5, **caractérisée en ce que** la liaison du tronçon de profilé extrudé (6) à la deuxième poutre en profilé creux (3) et à la troisième poutre en profilé creux (4) et, le cas échéant, à la première poutre en profilé creux (2), est établie au moyen de liaisons par soudage et/ou de liaisons par collage.

7. Structure de support selon l'une des revendications 1 à 6, **caractérisée en ce que**
la première poutre en profilé creux est une poutre faîtière (2) latérale s'étendant sensiblement horizontalement,
**en ce que** la deuxième poutre en profilé extrudé est un pilier B (3) s'étendant sensiblement verticalement, et
**en ce que** la troisième poutre en profilé extrudé est une longrine de faîtage (4) qui, en partant de la poutre faîtière (2), est cintrée en un arc, en une direction horizontale de manière que soit formé dans l'espace intérieur de carrosserie une zone d'angle (5), dans laquelle est situé le tronçon en profilé extrudé (6).
